# EUROPÄISCHE PATENTSCHRIFT

(11) **EP 1 943 083 B1**
(45) Veröffentlichungstag und Bekanntmachung des Hinweises auf die Patenterteilung: **15.01.2014**
(21) Anmeldenummer: 06776613.9
(22) Anmeldetag: 04.08.2006
(51) Int. Cl.: B29C 65/02, B65B 13/32, B29C 65/18

(54) **VERFAHREN ZUM BÜNDELN VON STAHLBUNDEN SOWIE BINDEBAND HIERFÜR**
METHOD FOR BUNDLING STEEL COILS AND BINDING TAPE FOR THIS
PROCEDE PERMETTANT DE LIER DES BOBINES D'ACIER ET RUBAN DE FICELAGE ASSOCIE

(30) Priorität: 07.10.2005 DE 102005048238
(43) Veröffentlichungstag der Anmeldung: 16.07.2008
(73) Patentinhaber: Voestalpine Stahl GmbH, 4020 Linz (AT)
(72) Erfinder: DORNINGER, Franz, A-4223 Katsdorf (AT); ZEILER, Hans-Jürgen, A-4040 Linz (AT)
(74) Vertreter: Naefe, Jan Robert
(86) Internationale Anmeldenummer: PCT/EP2006/007741
(87) Internationale Veröffentlichungsnummer: WO 2007/042098

(56) Entgegenhaltungen:
- DE-A1- 3 508 835
- DE-B- 1 010 230
- DE-C1- 4 033 646
- US-A- 3 995 409
- US-A- 4 661 185

## Beschreibung

Die Erfindung betrifft ein Verfahren und eine Vorrichtung zum Bündeln von Stahlbunden sowie ein Bindeband hierfür.

In der Stahlindustrie wird nach dem Guss das aus Brammen gewalzte Warmband am Ende des Walzprozesses zu großen Bunden aufgewickelt. Für die Herstellung kaltgewalzter Feinbleche erfolgt nach diesem Warmwalz- der Kaltwalzprozess in Dicken des Stahlbandes von üblicherweise 0,3 bis 3 mm. Diese feingewalzte Stahlbleche werden normalerweise nach dem Kalt-Walzprozess zu einem Bund oder Coil aufgerollt und anschließend einem Beschichtungsprozess, insbesondere für die Beschichtung mit Korrosionsschutzschichten zugeführt. Hierbei werden die Stahlbunde oder Coils wieder aufgerollt und durchlaufen die Beschichtungsanlage, beispielsweise eine Feuerverzinkungsanlage, eine elektrolytische Verzinkungsanlage, Phosphatierungsanlage und Ähnliches.

Nachdem das Stahlband diese Beschichtung durchlaufen hat, erfolgt ebenfalls wieder ein Aufrollen zu einem Stahlbund bzw. einem Coil.

Damit diese Stahlbunde bzw. Coils während des Transports oder der Lagerung im Stahlwerk, beispielsweise von der Walzstraße zu einer Beschichtungsstraße oder aber bei der Lagerung vor dem Versand zum Kunden und beim Kunden sich nicht unbeabsichtigt abspulen bzw. das freie Ende des Stahlbands nicht vom Bund selber vorsteht ist es bekannt, derartige Stahlbunde oder Coils mit Umreifungsbändern zu versehen, die ein Öffnen des Bundes verhindern sollen.

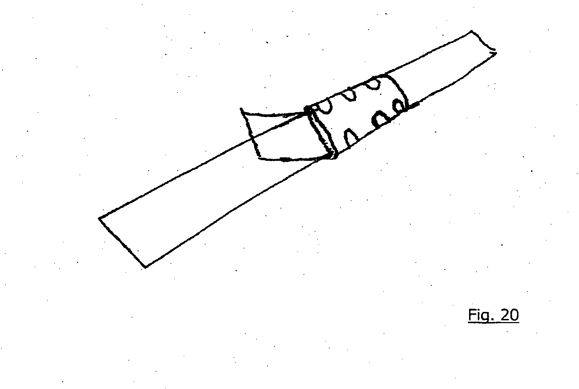

In der Stahlindustrie werden hierzu aufgrund des hohen Gewichts der Coils sogenannte Stahlbindebänder verwendet. Diese Stahlbindebänder (Figur 20) besitzen üblicherweise eine Breite von 25,4 mm bei einer Dicke von 0,8 mm. Um eine Bindung zu erzielen, werden diese Stahlbindebänder am Ende des jeweiligen Prozesses und nach dem das Stahlbund bzw. das Coil aufgespult ist, um das Coil gelegt, mit einer entsprechenden Maschine gespannt und dann im Überlappungsbereich ein Verschluss (Figur 20) hergestellt. Hierbei kann der Verschluss aus einer sogenannten Schließe bestehen, dies ist ein Stahlblech, welches radial um den zu schließenden Bereich gelegt wird und anschließend auf den Schließbereich gepresst wird, wobei ein sogenanntes Krimpen durchgeführt wird, bei dem nach Art eines Durchsetzfügens die Materialien der Schließe sowie der beiden Bindebandenden miteinander ineinander gedrückt und gegeneinander verschoben bzw. verzahnt werden.

Eine weitere Möglichkeit besteht darin, die Enden des Bindebands mit einer Punktschweißung miteinander zu verbinden oder ohne eine Schließe nach Art eines vereinfachten Durchsetzfügens zu verbinden.

Diese Stahlbindebänder besitzen Zugfestigkeiten um die 1.000 MPa.

Diese Stahlbindebänder haben mehrere massive Nachteile. Zum einen neigen die Stahlbindebänder aufgrund der Spannung mit der sie belastet sind beim Öffnen zum Zurückschlagen bzw. Wegspringen, wobei schon aufgrund des Gewichts der Stahlbindebänder und der elastischen Rückstellkräfte diese Stahlbindebänder eine erhebliche Gefahr darstellen. Hinzu kommt, dass sie relativ scharfkantige Seitenkanten haben, so dass häufig Schnittverletzungen auftreten. Es ist ein Fall bekannt geworden, bei dem die mit dem Öffnen beschäftigte Person aufgrund des rückschlagenden Stahlbandes Ihr Augenlicht verloren hat. Zusammenfassend ist somit das Stahlbindeband aus Unfall- und Arbeitssicherheitssicht unbefriedigend.

Zum anderen verursacht das Stahlbindeband, und hier insbesondere die Schließe oder der Verschlussbereich, in dem aufgewickelten Coil sogenannte Bandeindrücke, bei denen sich das Band oder die Schließe in das aufgewickelte Stahlband eindrücken. Hierdurch wird nicht nur die erste Wicklung des Stahlbunds beschädigt, sondern diese Bindebandeindrücke setzen sich häufig bis 15 mm und 20 mm tief in das Coil fort. Dies bedeutet, das beispielsweise bei Feinblech die ersten 15 bis 25 Wicklungen bzw. bis 200 m Bandlänge des Bunds beschädigt sind. Insbesondere bei Außenhautblechen wird dies vom weiterverarbeitenden Betrieb jedoch nicht toleriert. Es ist deshalb üblich, die ersten Wicklungen, die durch die Bindebandeindrücke beschädigt wurden vor der Weiterverarbeitung, beispielsweise in einem Presswerk, abzuschneiden und dem Stahlhersteller zurückzusenden.

Davon abgesehen, dass es materialwirtschaftlich unsinnig ist, Material von einem Hersteller zu einem Weiterverarbeiter zu schicken und wieder zurück zu transportieren, bedeutet dies einen ganz erheblichen Mehraufwand beim Weiterverarbeiter, da nicht sicher gesagt werden kann, wie viele Meter des neuen Bunds tatsächlich beschädigt sind. Somit muss zunächst die Beschädigung festgestellt werden, dann bestimmt werden, wo das abgespulte Stahlband getrennt wird und die Trennung selber durchgeführt werden. Bei 100.000 Jahrestonnen Einsatzgewicht (transportierte Masse) werden 10 %, d. h. circa 10.000 Jahrestonnen an Schrott durch diese Bindebandeindrücke erzeugt.

Grundsätzlich gilt: Je dünner das Feinblech, desto höher das Beschädigungsrisiko durch Bindebandeindrücke.

In der US 4 661 185 A wird ein Verfahren und eine Vorrichtung zum aneinander fixieren von überlappenden Bereichen von einer thermoplastischen Bandschlinge um ein Objekt beschrieben. Nachdem das Band so zugeführt wurde, dass es die Schlinge bildet, wird der obere Bandbereich zurückgehalten, während der zurückbleibende Bandbereich dicht gezogen wird, um die Schlinge anzuspannen.

Aus der DE 10 10 230 B ist ein Kunstseidenerzeugnis insbesondere in Bandform bekannt, das hauptsächlich aus einer seidenähnlichen Faserstoffbahn besteht, die als Grundschicht dient und aus einer festen kardierten Mischung aus Viskosekunstseidestapelfasern und plastifizierten Acetatseidestapelfasern gebildet wird.

Aus der DE 40 07 560 C2 ist ein Umreifungsbandverschluss für thermoplastische Umreifungsbänder (jedoch nicht für Coils) und ein Verfahren zu seiner Herstellung bekannt, wobei bei diesem Umreifungsbandverschluss die Abstreiffestigkeit eines Verschlusses der Enden der thermoplastischen Bänder erzielt werden soll. Hierbei werden die sich überlappenden Bereiche mittels einer Reibschweißung miteinander verbunden. Die Maßnahmen zur Erhöhung des Abstreifwiderstands der sich überlappenden Teile werden an entgegengesetzten Seiten der Schweißverbindung vorgenommen, wobei dies eine Punktschweißverbindung außerhalb der eigentlichen Reibschweißverbindung sein kann, oder an den Enden der Schweißverbindung eine Umklammerung aus Draht oder Band angesetzt wird oder ein in Laufrichtung des Umreifungsbands zum umreiften Gegenstand abgewinkelter Mittelabschnitt vorgenommen wird. An den Mittelabschnitt schließt sich jeweils ein zur Laufrichtung paralleles Vorlaufteil und paralleles Nachlaufteil an oder die sich überlappenden Umreifungsbandeinschnitte der im thermoplastischen Zustand miteinander verschweißter Innen- und Außenflächen werden vor dem Erstarren des Kunststoffs geringfügig getrennt, wobei der thermoplastifizierte Kunststoff unter Bildung einer wabenförmigen Zwischenschicht mit einer hohen Abstreiffestigkeit erstarrt.

Versuche bei der Anmelderin haben ergeben, dass die thermoplastischen Kunststoffbänder, die aus der Verpackungsindustrie gut bekannt sind, auch dann nicht als Stahlbundbindebänder ge-eignet sind, wenn die obigen Maßnahmen ergriffen werden, da die Zugfestigkeiten bei weitem nicht ausreichen. Die angegebenen Maßnahmen zum Erhöhen der Abstreiffestigkeit führen selbst wiederum zum Bindebandeindrücken.

Aus der DE 40 18 659 C2 ist eine Reibschweißvorrichtung zur Herstellung eines Verschlusses an einem biegsamen thermoplastischen Umreifungsband bekannt, mit zwei gegeneinander wirkenden, zueinander komplementär geformten Bandgreifelementen, zwischen denen zwei sich gegenseitig überlappende Bandabschnitte des Umreifungsbands aufnehmbar und zusammenpressbar sind, wobei jedes Bandgreifelement eine konturierte Oberfläche aufweist und wobei eines der Bandgreifelemente mit einem Antrieb für die Reibschweißbewegung verbunden ist, wobei die Oberflächen der Bandgreifelemente in Bandlängsrichtung eine wellenförmige Krümmung, bestehend aus einem konvex gekrümmten Flächenabschnitt in einem konkav gekrümmten Flächenabschnitt, aufweisen, wobei die durch einen Trennschnitt begrenzten Bandenden der beiden überlappenden Bandabschnitte jeweils an dem konkav gekrümmten Flächenabschnitt der Bandgreifelemente anliegen und das an den Reibschweißantrieb angeschlossene Bandgreifelement in Querrichtung des Umreifungsbands horizontal bewegbar ist.

Auch mit einer solchen Vorrichtung ist keine Verbindung eines herkömmlichen Kunststoffbands herstellbar, die den gestellten Anforderungen gerecht werden würde.

Aufgabe der Erfindung ist es, ein Verfahren zum Bündeln von Stahlbunden zu schaffen, welches einfach, schnell und sicher durchführbar ist, eine Verbindung mit hoher Tragfähigkeit erzeugt und keine Bindebandeindrücke erzeugt.

Die Aufgabe wird mit einem Verfahren mit den Merkmalen des Anspruchs 1 gelöst.

Eine weitere Aufgabe der Erfindung ist es, ein Bindeband, insbesondere für Stahlcoils bzw. Stahlbunde (oder andere Metallcoils) zu schaffen, welches bei einer ausreichenden Zug- und Reißfestigkeit des Grundwerkstoffs eine tragfähige Verbindung ermöglicht und zudem weder mit dem Grundwerkstoff noch im Verbindungsbereich Bandeindrücke verursacht.

Die Aufgabe wird mit einem Bindeband mit den Merkmalen des Anspruchs 11 gelöst.

Vorteilhafte Weiterbildungen sind in den jeweils abhängigen Ansprüchen gekennzeichnet.

Das erfindungsgemäße Bindeband besteht aus einem Hochleistungsverbundwerkstoff, der aus im Wesentlichen parallel zueinander ausgerichteten Endlosfasern ausgebildet ist, die sich in einer thermoplastischen Kunststoffmatrix befinden.

Es wurde herausgefunden, dass ein solches Band eine ausreichende Zugfestigkeit um die 1000 MPa besitzt, wenn es eine Breite von 30 mm und eine Dicke von 200 µm besitzt.

Die Fasern des Hochleistungsverbundwerkstoffs sind beispielweise Glasfasern, Kohlefasern, Aramidfasern, und alle sonstigen bekannten Fasern für Verbundwerkstoffe. Bevorzugt handelt es sich um Glasfasern.

Die Matrix wird aus einem thermoplastischen Kunststoff ausgebildet, wobei alle gängigen thermoplastischen Kunststoffe denkbar sind, wie z. B. Polyolefine oder Polyamide. Bevorzugt ist die Matrix aus einem Polyamid ausgebildet.

Der Hochleistungsverbundwerkstoff aus dem das Bindeband ausgebildet ist, wird in sehr breiten, großen Bahnen oder Bögen hergestellt, die üblicherweise dazu verwendet werden, hieraus für die Luft- und Raumfahrt, beispielsweise Behälter, zu wickeln. Ferner ist bekannt, derartige großflächige Bahnen thermoplastisch beispielsweise durch Tiefziehen umzuformen, um hieraus besonders leichte, hochfeste Bauteile zu erzielen. Derartige Bahnen werden beispielsweise auch im Karosseriebau verwendet.

Das erfindungsgemäße Verfahren sieht vor, entsprechende schmale Bänder bzw. Streifen aus dem Hochleistungsverbundwerkstoff zu erzeugen, um das Stahlcoil zu legen und die sich überlappenden Bereiche zu erwärmen und mit hohem Druck ineinander zu pressen. Im Gegensatz zu einer Reibschweißverbindung, die den Faserverbundwerkstoff, insbesondere die Fasern beschädigen würde und zudem auch eine ungünstige Verteilung der Matrix herbeiführt, führt das erfindungsgemäße Verfahren dazu, dass im Bereich der Verbindungsstelle die Dicke von 200 µm nicht wesentlich überschritten wird, wobei jedoch die Matrix der sich überlappenden Bänder homogen ineinander läuft und zudem die Fasern in diesem empfindlichen Bereich eine besonders hohe Packungsdichte erreichen. Diese besonders hohe Packungsdichte ermöglicht, dass die Fasern sehr eng beieinander liegen, so dass die bei einer Zugbelastung auftretenden Scherkräfte zwischen den Fasern sehr gut verteilt werden. Zudem hat sich gezeigt, dass diese Verbindung auch bei direkter Belastung keine Eindrücke verursacht.

Ein erfindungsgemäßes Umreifungsband, was mit dem erfindungsgemäßen Verfahren um ein Coil gelegt wurde und befestigt wurde, besitzt eine so ausreichend hohe Festigkeit, dass nicht mehr Bindebänder als bislang verwendet werden müssen, so dass bei vergleichbarem Preis der Bindebänder keine Mehrkosten verursacht werden.

Bei dem erfindungsgemäßen Verfahren ist von Vorteil, dass einfach, schnell und sicher eine hochfeste Verbindung des Bindebands erzeugt wird, die zudem im Verbindungsbereich so dünn ist, dass trotz einer überragend hohen Zugfestigkeit keine Eindrücke verursacht werden.

Bei dem erfindungsgemäßen Bindeband ist von Vorteil, dass dieses besonders dünn ist und schon deshalb keine Bindebandeindrücke hinterlässt, die Zug- und Scherfestigkeiten jedoch so hoch sind, dass dieses Bindeband die angestellten Forderungen voll erfüllt. Ferner ist bei dem Hochleistungsverbundwerkstoff von Vorteil, dass in dem Verbindungsbereich bei zu hohen Zugkräften die Verbindung nicht schlagartig durch Reißen versagt, sondern durch nacheinander langsames Herausziehen einzelner Fasern und ein derart vorgeschädigter Werkstoff im allgemeinen immer noch eine so hohe Restfestigkeit hat, dass das Aufgehen des Bunds bzw. des Coils verhindert wird.

Ferner ist bei dem erfindungsgemäß verwendeten Werkstoff von Vorteil, dass dieser Werkstoff besonders leicht ist, keine metallisch scharfkantigen Ränder besitzt und beim Öffnen auch nicht derart unter Spannung steht, dass er beim Schneiden wegschlägt. Hierdurch ist die Unfallgefahr gegenüber herkömmlichen Stahlbindebändern deutlich vermindert.

Die Erfindung wird anhand einer Zeichnung beispielhaft erläutert. Es zeigen hierbei:
- Figur 1:: schematisch ein Coil mit darum gelegtem Bindeband, wobei eine erfindungsgemäße Vorrichtung angeordnet ist;
- Figur 2:: einen Ausschnitt aus Figur 1, zeigend die Vorrichtung in einem schematisierten Querschnitt;
- Figur 3:: stark schematisiert die Funktionsweise der Vorrichtung;
- Figur 4:: einen ersten Schritt bei der händischen Umreifung;
- Figur 5:: einen zweiten Schritt bei der händischen Umreifung unter Verwendung einer Vorrichtung als Handgerät;
- Figur 6:: stark schematisiert die Draufsicht auf ein erfindungsgemäßes Bindeband;
- Figur 7:: stark schematisiert einen Längsschnitt durch ein erfindungsgemäßes Bindeband;
- Figur 8a:: stark schematisiert der Überlappungs- und Befestigungsbereich des Bindebands;
- Figur 8b:: den Bereich nach Figur 8a nach dem Zugversuch;
- Figur 9:: ein Spannungs-Dehnungs-Diagramm eines Stahlbindebands;
- Figur 10:: ein Spannungs-Dehnungs-Diagramm eines herkömmlichen Kunststoffverpackungsbands;
- Figur 11:: ein Spannungs-Dehnungs-Diagramm eines weiteren Kunststoffverpackungsbandes;
- Figur 12:: ein Spannungs-Dehnungs-Diagramm des erfindungsgemäßen Bandes;
- Figur 13:: eine Tabelle, zeigend die Daten zu Figur 9;
- Figur 14:: eine Tabelle, zeigend die Daten zu Figur 10;
- Figur 15:: eine Tabelle, zeigend die Daten zu Figur 11;
- Figur 16:: eine Tabelle, zeigend die Daten zu Figur 12;
- Figur 17:: eine Tabelle, zeigend querschnittbereinigte Werte für das erfindungsgemäße Bindeband;
- Figur 18:: eine Tabelle, zeigend querschnittbereinigte Werte für das erfindungsgemäße Kunststoffband;
- Figur 19:: eine Tabelle, zeigend querschnittbereinigte Werte für das erfindungsgemäße Bindeband;
- Figur 20:: den Schließbereich eines Stahlbindebands.

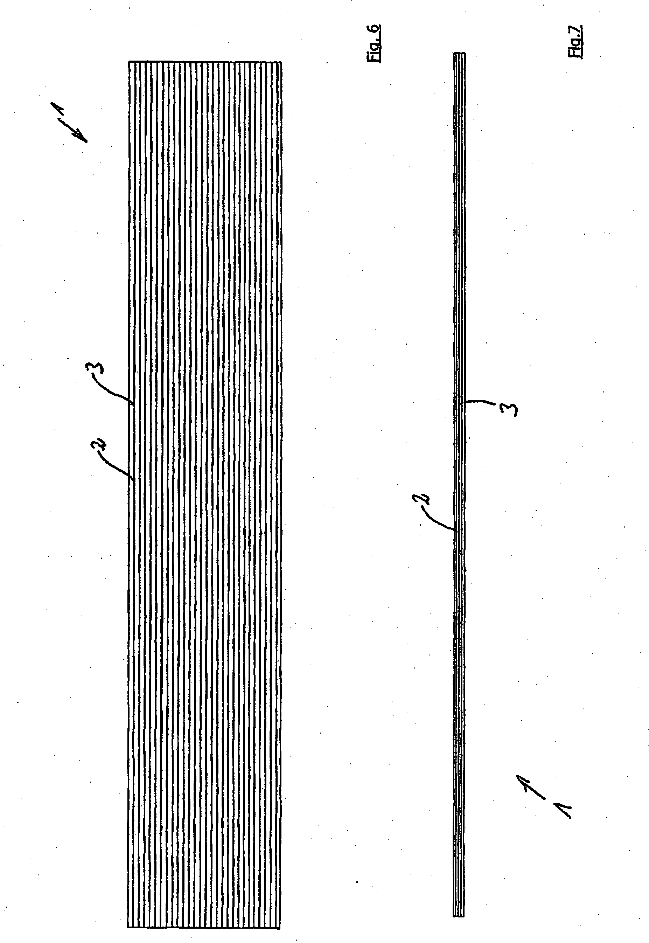

Das erfindungsgemäße Bindeband 1 (Figuren 6 bis 8b) besteht im Wesentlichen aus endlos verlaufenden Fasern 2 die ein- oder mehrlagig in einer Kunststoffmatrix 3 eingebettet sind. Die Fasern können hierbei alle gängigen Fasern, die bei Verbundwerkstoffen eingesetzt werden, sein. Insbesondere können dies Glasfasern, Kohlefasern, Aramidfasern, aber auch natürliche Fasern sein. Bevorzugt werden Glasfasern verwendet. Die Matrix 3 besteht aus einem Kunststoff, vorzugsweise einem thermoplastischen Kunststoff wie einem Polyolefin oder einem Polyamid.

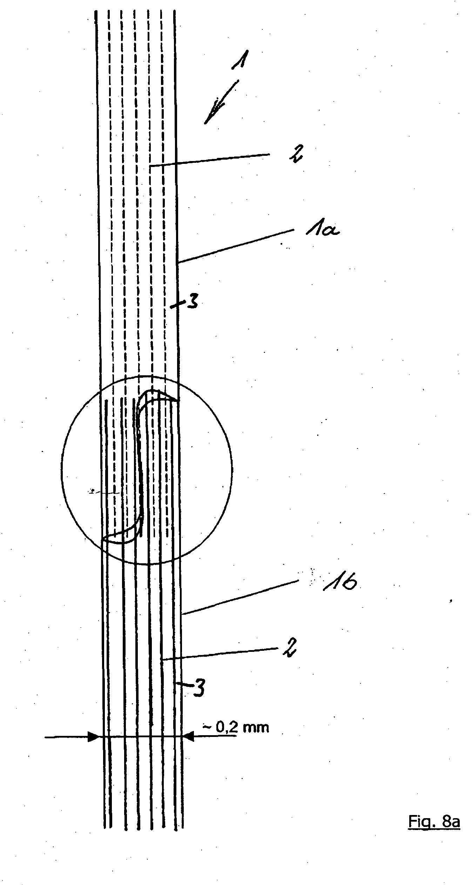

Das Bindeband 1 ist relativ flach ausgebildet und besitzt eine Breite von beispielsweise 10 bis 50 mm, insbesondere 25 bis 40 mm und vorzugsweise 30 mm bei einer Dicke von 150 bis 400 µm, vorzugsweise 200 bis 350 µm. Um eine Verbindung des Bindebands herbeizuführen (Figur 8a) werden die entsprechenden Bindebandenden 1a, 1b aufeinander gedrückt und auf Temperaturen von 150° bis 500°C, vorzugsweise 200° bis 400°C insbesondere 350°C erhitzt, wobei sich diese Erwärmungstemperatur nach dem verwendeten Kunststoff richtet. Diese Erwärmung führt dazu, dass der Kunststoff plastisch wird und es möglich ist, diesen Kunststoff zu verformen bzw. den nachfolgenden Schritt durchzuführen. Nachdem der Kunststoff ausreichend erweicht ist, wird auf den Überlappungsbereich des Bindebands Druck ausgeübt. Bevorzugt wird ein Druck ausgeübt von 0,1 N/mm² bis 10 N/mm², vorzugsweise 1 N/mm².

Wie insbesondere stark schematisiert in Figur 8a erkennbar ist, werden durch diesen Druck die Fasern 2 im Bereich der Verbindungsstelle ineinander gedrückt, wobei sich die gesamte Höhe des Bindebands nicht wesentlich ändert, sondern im Bereich der Verbindungsstelle die Anzahl der Fasern pro Flächeneinheit erhöht. Durch die hohe Anzahl der Fasern im Bereich der Verbindungsstelle können sich die Fasern bei auftretenden Zugbelastungen und damit Schubkräften gut gegeneinander abstützen, wobei der Abstand der Fasern zueinander sehr klein ist und somit eine sehr gute Kraftübertragung von den einzelnen Fasern über die Matrix stattfinden kann, da die Matrixbereiche relativ klein sind.

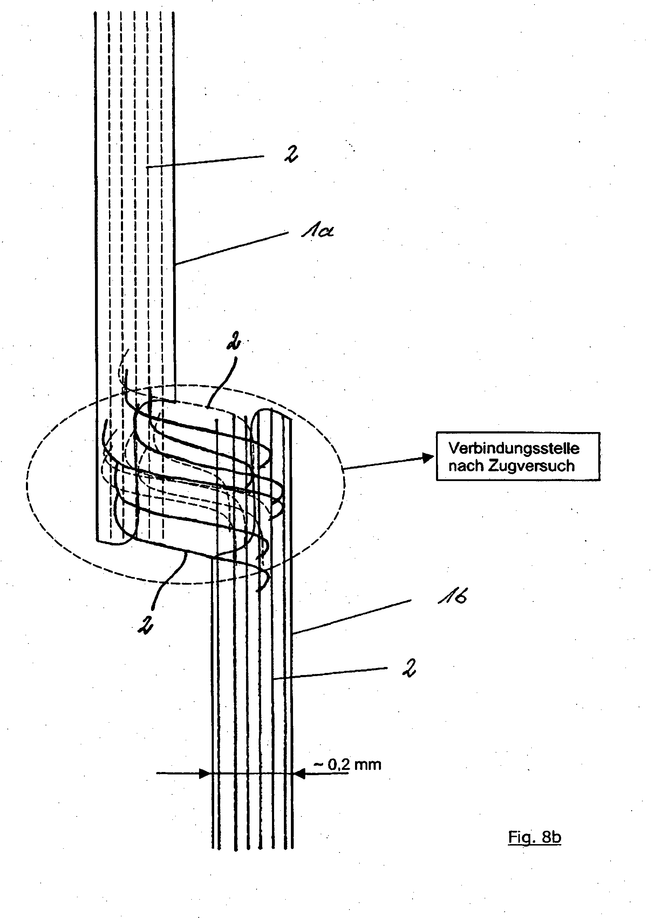

Wird die Zugfestigkeit des Bindebands überschritten (Figur 8b) kommt es nicht zu einem schlagartigen Zerreißen im Bereich der Verbindungsstelle, sondern zu einem schrittweisen Auseinandergehen der Bindebandenden im Bereich der Verbindungsstelle, wobei einzelne Fasern aus dem Verbindungsbereich bzw. aus den jeweiligen Bindebandenden herausgezogen werden, welche eine gewisse Restfestigkeit des Bands ermöglicht.

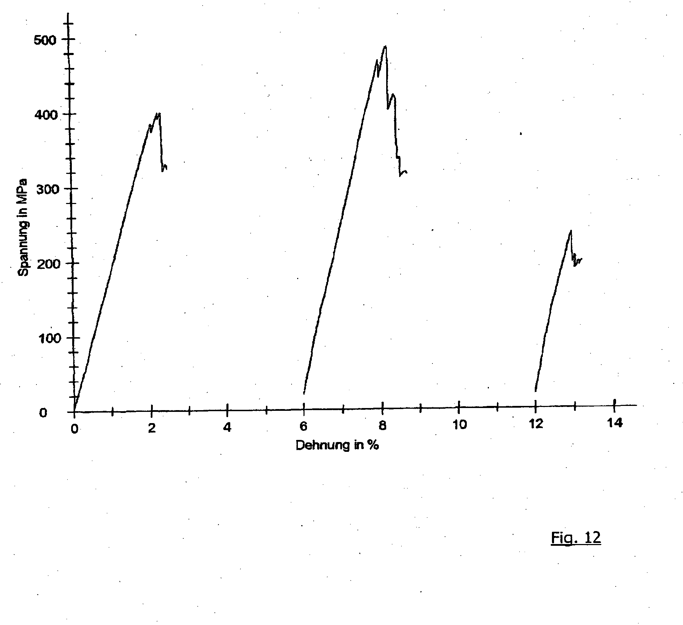

Das erfindungsgemäße Bindeband zeigt in Zugversuchen (Figur 12) ein gutes Verhalten bezüglich der Dehnung. Wichtig ist es bei dem Bindeband, dass es sich nach dem Umlegen um ein Coil nicht zu stark dehnt, was mit dem erfindungsgemäßen Bindeband ohne weiteres erreicht wird. Das Band zeigt Dehnungen, die mit denen eines Stahlbindebands vergleichbar sind. Die drei Werte in Figur 12 zeigen ganz links das Bindeband im geschlossenen Zustand, wobei das Bindeband hierbei im Bereich einer relativ gut ausgeführten Verbindung reißt.

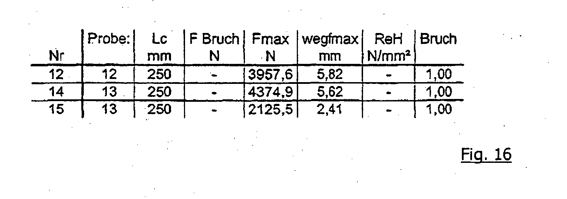

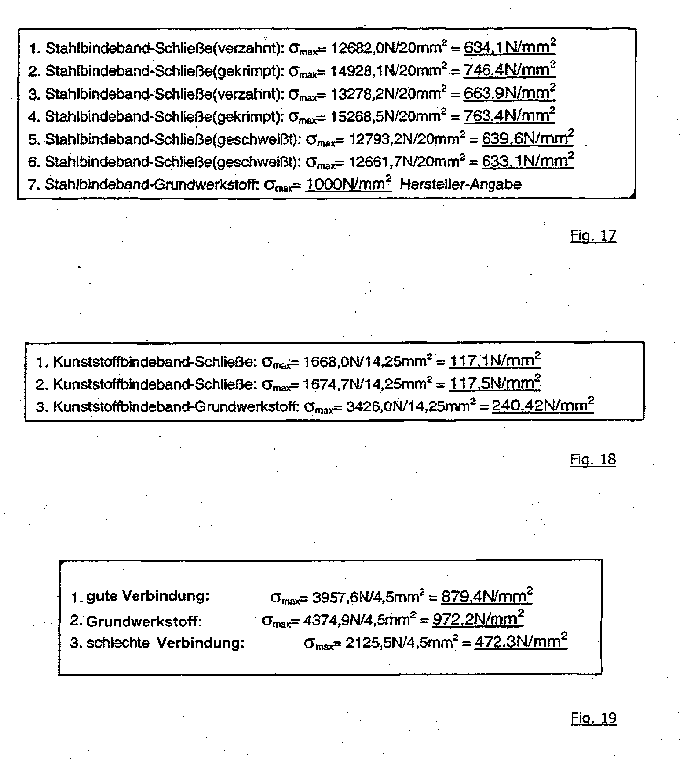

Die mittlere Kurve zeigt das Zerreißen eines Bindebands im Bereich des vollen Materials ohne eine Verbindung und die Kurve ganz rechts zeigt eine absichtlich schlechte Verbindung. Die entsprechenden Werte sind in der Tabelle Figur 16 angegeben, wobei in der Tabelle in Figur 19 die relative Festigkeit in N/mm² angegeben ist.

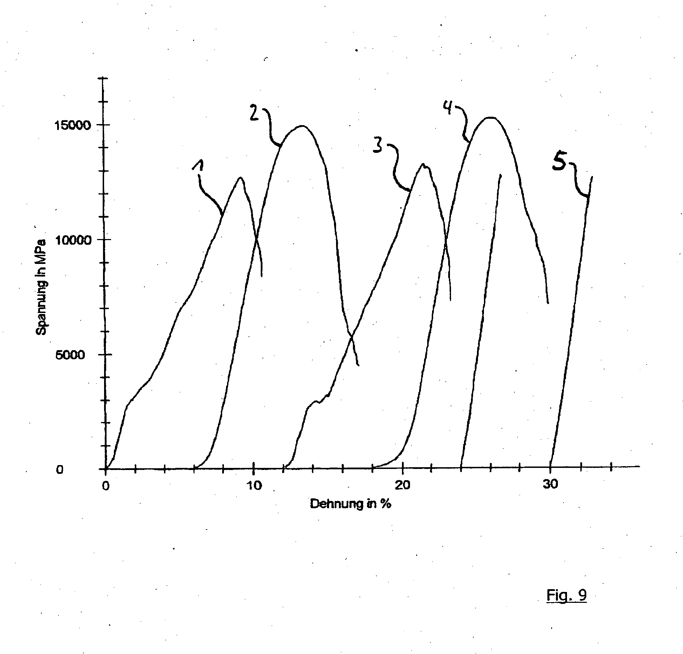

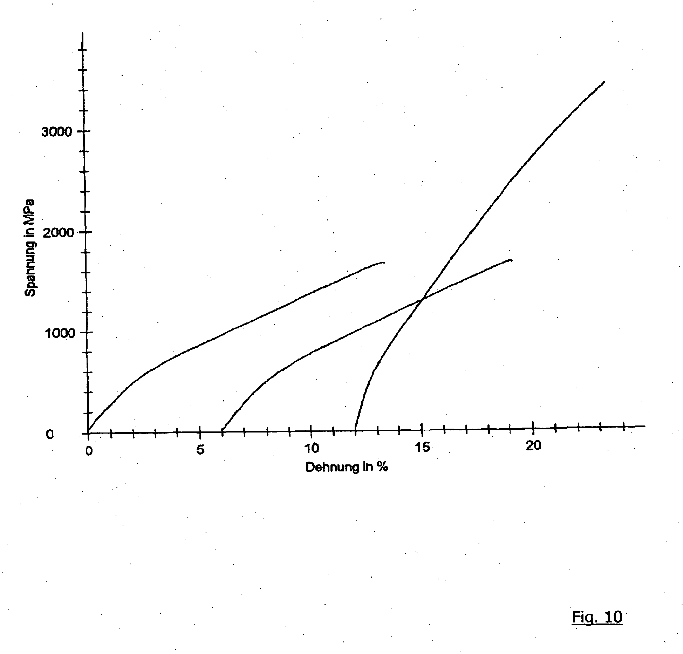

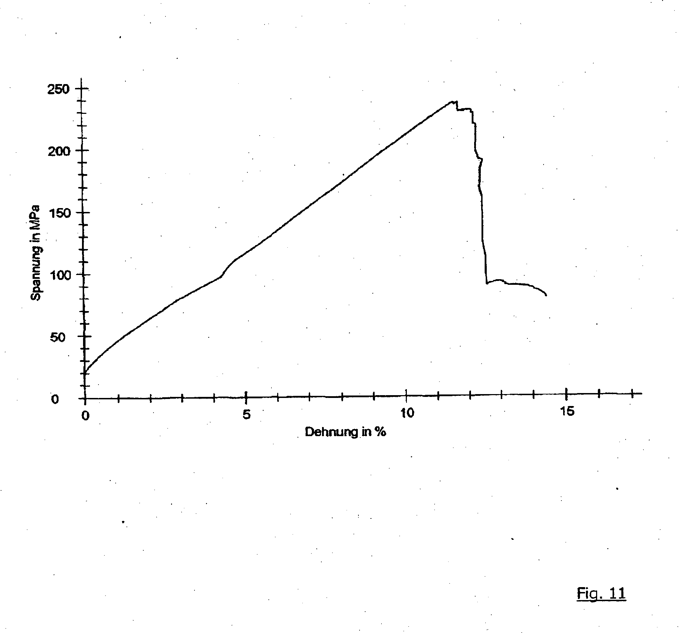

In Vergleichsversuchen wurden die Zugfestigkeiten eines herkömmlichen Stahlbindebands (Figur 9) und eines herkömmlichen Kunststoffbands (Figur 10) sowie eines für allgemeine Verpackungen verbreiteten Kunststoffbands (Figur 11) geprüft.

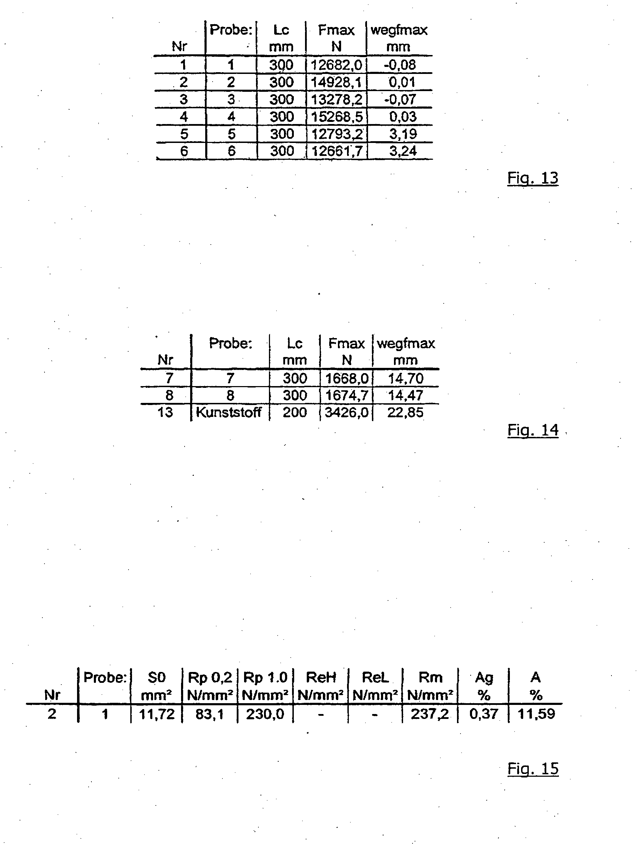

Die in Figur 9 gezeigten Zugfestigkeiten für Stahl sind bezüglich der Ergebnisse in Figur 13 wiedergegeben, wobei in Figur 17 die relativen Werte in N/mm² angegeben sind. In Figur 17 sind die verschiedenen Verschlussmechanismen angegeben und hierfür die entsprechenden Zugfestigkeiten angegeben. Man kann leicht erkennen, dass die beste Stahlverbindung immer noch schlechter ist als eine gute Verbindung des erfindungsgemäßen Bindebands, wobei die Grundwerkstoffe in etwa die gleiche Zugfestigkeit haben. Aus einem Vergleich der Figuren 13 und 16 ergibt sich, dass sich die Zugfestigkeit des Stahls bei der Verwendung als Stahlbindeband in den üblichen Dimensionen natürlich höher ist als der des erfindungsgemäßen Werkstoffs, hier jedoch ein Potential vorgehalten wird, welches in keinem Fall benötigt wird. Die Zugfestigkeiten des erfindungsgemäßen Bindebands sind für den gewünschten Zweck vollständig ausreichend.

Ein herkömmliches Kunststoffband, wie es in Figur 10 gezeigt ist zeigt dagegen, ein Dehnungsverhalten, wie es für den angegebenen Zweck unerwünscht und ungeeignet ist. Zudem sind die Zugfestigkeiten, die in Figur 18 und in Figur 14 angegeben sind, absolut unzureichend für den Zweck bzw. die Verwendung als Bindeband. Zuzüglich zu diesen schlechten mechanischen Eigenschaften hinterlässt dieses Bindeband Bindebandeindrücke im Coil.

Darüber hinaus wurde ein herkömmliches an sich bekanntes Verpackungsband mit einer Breite von 15 mm und einer Dicke von 0,8 mm geprüft. Derartige Bänder werden üblicherweise reibverschweißt oder mit Bindebandschließen ausgestattet, wobei diese Verpackungsbänder üblicherweise im Bereich von Postverpackungen zum Teil aber auch im Bereich von Verpackungen für den Baubereich, beispielsweise von Mauersteinen oder Ähnlichem, verwendet werden.

Der Zugversuch in Figur 11 zeigt, das sowohl die Dehnung bei diesem Produkt viel zu hoch für die geforderte Leistung ist und zudem dieses Band eine Zugfestigkeit aufweist, die in keinster Weise den Anforderungen gerecht wird. Das Ergebnis ist in Figur 15 gezeigt.

Es bleibt festzustellen, dass das erfindungsgemäße Bindeband in keiner Weise mit herkömmlichen Kunststoff oder Stahlbändern vergleichbar ist. Bei einer sehr geringen Dicke besitzt es eine Zugfestigkeit die der von Stahl annähernd entspricht, wobei in einfacher Weise eine Verbindung mittels Erhitzung und anschließender Druckausübung möglich ist. Dieses Band hinterlässt auch bei provoziert starken Belastungen direkt auf das Band sowie der üblichen Handhabung von Stahlcoils beim Transport und bei der Lagerung keinerlei Bindebandeindrücke im Stahl. Zu dem ist von Vorteil, dass dieses Bindeband ohne große Gefahr für einen Verwender getrennt werden kann, da es aufgrund seines geringen Gewichts nicht zurückschlägt wie ein Stahlband. Ferner sind seine Kanten nicht besonders scharf, so dass auch keine starke Schnittgefahr von diesen Band ausgeht.

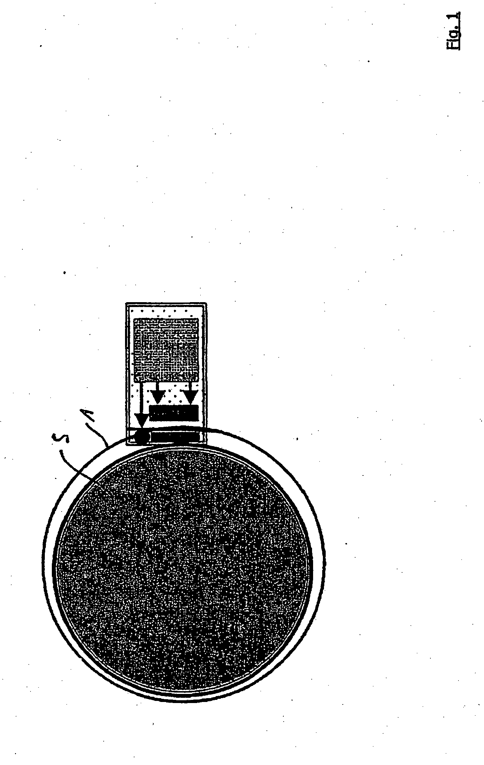

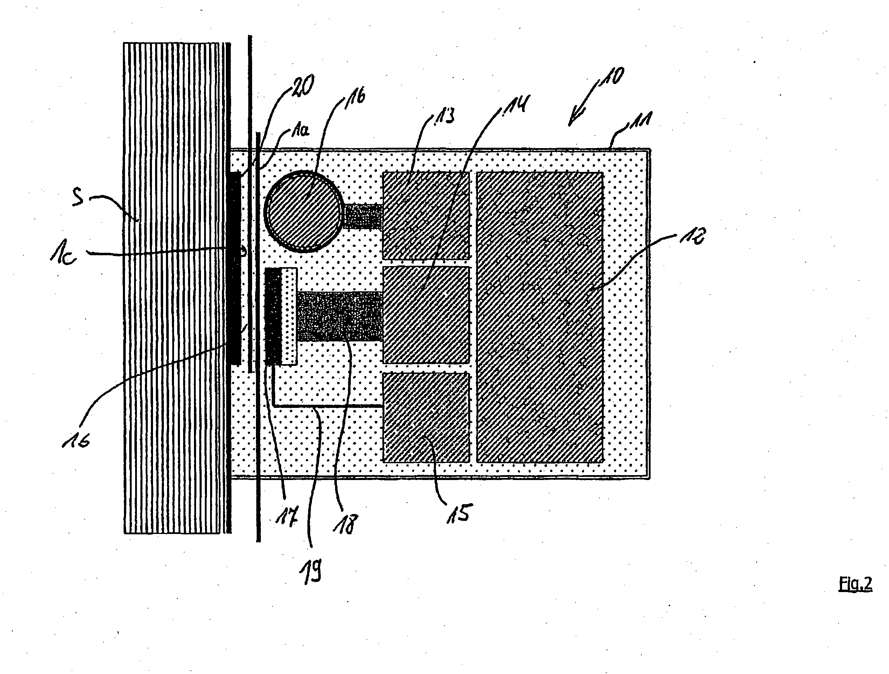

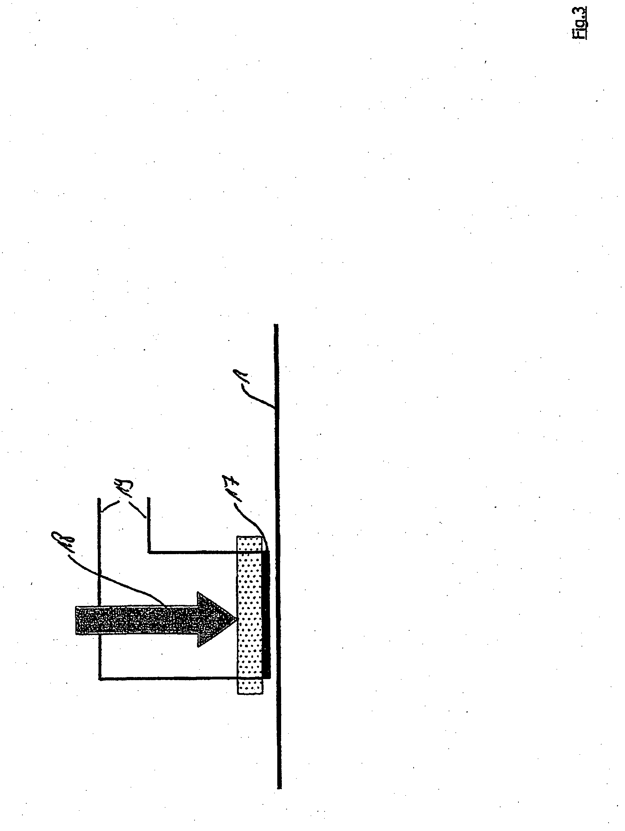

Eine geeignete Vorrichtung 10 (Figuren 1 bis 5) ist prinzipiell wie folgt aufgebaut (Figur 2). In einem Gehäuse 11 befindet sich eine Ablaufsteuerungseinrichtung 12 die auf eine Kraftaufbringungseinrichtung 13, eine Presseinrichtung 14 für ein Heizelement und auf eine Heizungssteuerungseinrichtung 15 wirkt. Zudem ist mit der Kraftaufbringungseinrichtung 13 eine Spannrolle 16 mit einem entsprechenden motorischen Antrieb (nicht gezeigt) verbunden. Mit der Presseinrichtung 14 zur Aufbringung einer Presskraft ist ein Heizelement bzw. Heizeinrichtung 17 verbunden, welches über einen Stempel 18 mit der Einrichtung 14 verbunden ist. Die Heizungssteuerungseinrichtung 15 ist über eine entsprechende Steuer- und Versorgungsleitung 19 mit dem Heizelement 17 verbunden. Zudem besitzt die erfindungsgemäße Vorrichtung 10 eine Gegenplatte 20.

Um eine erfindungsgemäße Schweißverbindung zwischen zwei Bindebandenden herbeizuführen wird ein entsprechendes erfindungsgemäßes Bindeband 1 (Figur 1) um ein Stahlcoil S gelegt. Die Bindebandenden 1a, 1b werden seitlich oder diametral gegenüberliegend in das Gerät 10 eingeführt, wobei sie einen Überlappungsbereich 1c bilden. Im Überlappungsbereich 1c ist auf einer Seite der sich überlappenden Bindebandenden 1a und 1b die Gegenplatte 20 flächig und parallel zu den Bindebandenden 1a und 1b angeordnet. Der Gegenplatte gegenüberliegend ist die Spannrolle 16 vorhanden, wobei benachbart zur Spannrolle 16 das Heizelement mit der entsprechenden Vorrichtung zur Aufbringung einer Presskraft ebenfalls gegenüber der Gegenplatte 20 angeordnet ist.

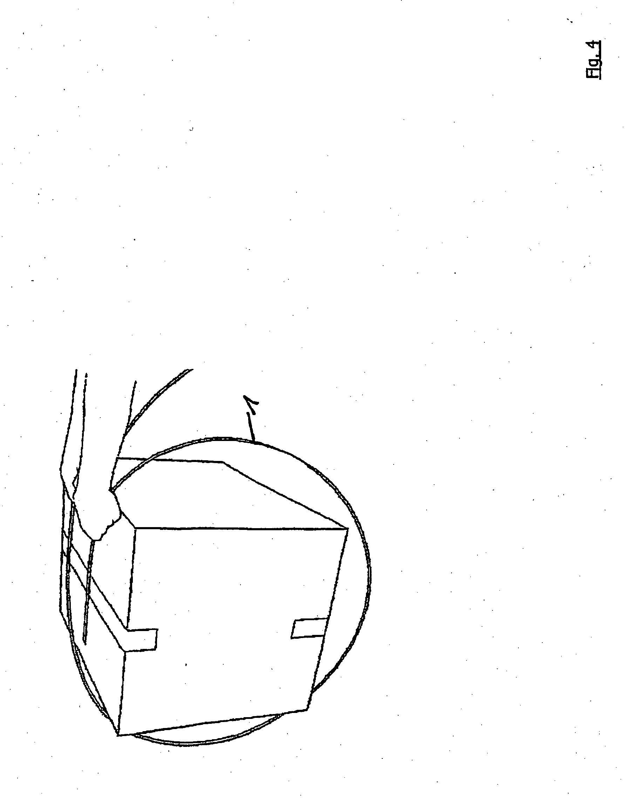

Das erfindungsgemäße Bindeband kann auch um herkömmliche Verpackungen die gegen starke Zugkräfte gesichert sein müssen (Figur 4) händisch herumgelegt werden.

Das erfindungsgemäße Verfahren sieht vor, nach dem die Bindebandenden 1a und 1b sich überlappen, die Bindebandenden 1a und 1b gegeneinander zu bewegen und so dass Bindeband 1 zu spannen. Hierzu wird mittels der Kraftaufbringungseinrichtung 13 die Spannrolle 16 auf ein Bindebandende 1a aufgebracht und beginnt sich zu bewegen, so dass das Bindebandende 1a so gegen das Bindebandende 1b bewegt wird, dass sich der Überlappungsbereich vergrößert bzw. Spannung auf das Bindeband 1 aufgebracht wird. Ist das Bindeband ausreichend gespannt wird über die Ablaufsteuerung 12 die Presseinrichtung 14 und/oder das Heizelement 17 betätigt, so dass über dem Stempel 18 das Heizelement 17 auf die Bindebandenden 1a und 1b aufgebracht wird.

Hierbei kann zunächst mit dem Heizelement 17 Wärme auf die Bindebänder aufgebracht werden und anschließend ein Hub des Kolbens oder Bewegungseinrichtung 18 durchgeführt werden, um die Bindebandenden 1a, 1b ineinander zu drücken, wenn die Matrix 3 weich ist. Eine weitere Möglichkeit ist es, dass Heizelement 17 auf die Bindebandenden aufzubringen, dann zu erhitzen und beim Erhitzen bereits Druck auszuüben oder zunächst nur eine Erhitzung durchzuführen und dann den Druck aufzubringen. Die erfindungsgemäße Vorrichtung kann dabei in einer Bundumreifungsvorrichtung am Ende einer Walz- oder Beschichtungsstraße angeordnet sein.

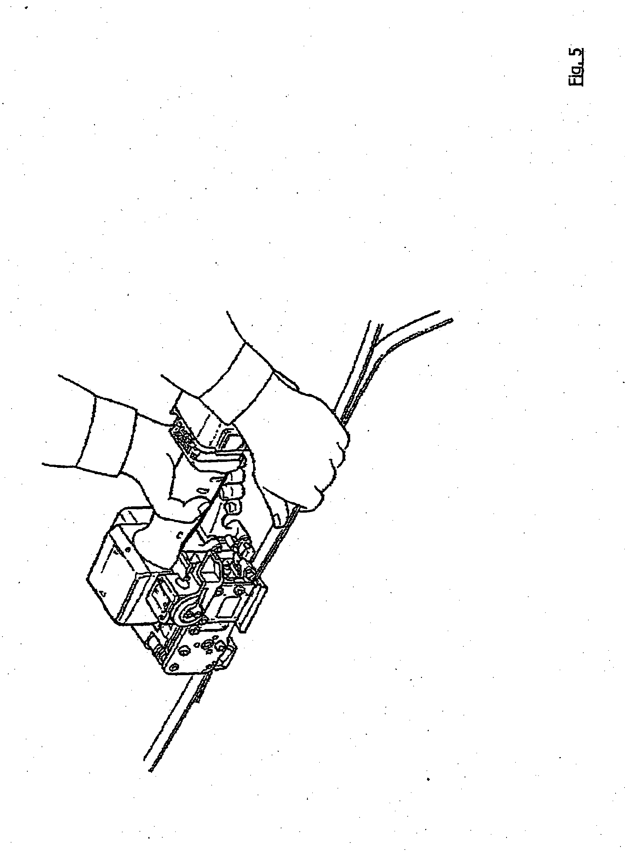

Bei einer weiteren vorteilhaften Ausführungsform (Figur 5) ist die Vorrichtung 10 als Handgerät ausgebildet und kann insbesondere bei Verpackungen wie sie in Figur 4 gezeigt sind oder beim händischen Umreifen von Coils verwendet werden.

Bei einer weiteren vorteilhaften Ausführungsform besitzt die Vorrichtung 10 einen Aufnahmespalt oder -schlitz für die Bandenden 1a, 1b (nicht gezeigt). Der Aufnahmespalt oder -schlitz ist dabei entweder von der Seite her zugänglich oder besitzt axiale Öffnungen im Gehäuse der Vorrichtung 10, so dass die Bindebandenden 1a, 1b von gegenüberliegenden axialen Enden in den Schlitz einsteckbar sind.

Zudem besitzt die Vorrichtung 10 zwei Spannrollenpaare, welche axial beabstandet an dem Schlitz angeordnet sind, wobei die Spannrollen eines Spannrollenpaares beidseitig des Schlitz gegenüberliegend angeordnet sind. In dem Bereich zwischen den beiden Spannrollenpaaren ist den Schlitz auf der einen Seite begrenzend die Gegenplatte 20 angeordnet. Der Gegenplatte 20 gegenüberliegend ist die Presseinrichtung 14 mit dem Heizelement 17 vorhanden, wobei die Gegenplatte 20 und/oder die Presseinrichtung 14 auf das jeweilige gegenüberliegende Element zuschiebbar bzw. pressbar sind.

Bei einer weiteren vorteilhaften Ausführungsform ist die Gegenplatte 20 selbst als zweite Presseinrichtung 14 mit einem zweiten Heizelement 17 ausgebildet, wobei die beiden Presseinrichtungen 14 aufeinander zubewegbar und schiebbar sind.

Das erfindungsgemäße Verfahren bei dieser Vorrichtung sieht vor, dass die Bindebandenden 1a, 1b entweder seitlich in die Vorrichtung eingeführt werden oder bezüglich des Schlitzes durch axiale Öffnungen im Gehäuse der Vorrichtung 10 soweit eingeschoben werden, bis sich die Bindebandenden durch beide Rollenpakete erstrecken. Um die Bindebandenden gegeneinander zu spannen, werden die Rollenpakete drehbar angetrieben, wobei die Drehrichtung gegenläufig ist. Hierdurch werden die Bindebandenden gegeneinander verschoben, und zwar so, dass es zu einem Spannen des Bindebandes kommt. Ist eine ausreichende Spannung erreicht, werden das oder die Heizelemente aufgeheizt bis die Bindebandenden in dem Bereich zwischen der Gegenplatte 20 und der Presseinrichtung 14 eine ausreichende Temperatur haben, bzw. zwischen den beiden Presseinrichtungen 14 und den beiden Heizelementen 17 eine ausreichende Temperatur haben. Anschließend wird mit der oder den Presseinrichtung(en) der erforderliche Druck auf die Bindebandenden 1a, 1b aufgebracht.

Bei dem erfindungsgemäßen Verfahren ist von Vorteil, dass diese Verfahren gegenüber herkömmlichen Verfahren zum Verbinden von Bindebandenden erheblich einfacher und schneller durchführbar ist und zudem keine Schließen aufgebracht werden müssen, die einerseits bezüglich der Festigkeit eine Schwächungszone innerhalb des Bindebands darstellen und zu dem die sowieso schon über die normalen Bänder eingebrachten Bindebandeindrücke noch verstärkt.

Das erfindungsgemäße Verfahren, die erfindungsgemäße Vorrichtung und das erfindungsgemäße Bindeband können selbstverständlich auch bei anderen Bunden oder Coils wie Aluminium- oder Kupfercoils, sowie für das Bündeln von Stahl- oder anderen Rohren, Blech- oder Kunststoff-Platinen, -Platten etc. eingesetzt werden.

## Patentansprüche

1. Verfahren zum Bündeln oder Umreifen von Bunden aus aufgerolltem Metall, wie Aluminium-, Kupfer- oder Stahlbunden, wobei ein Bindeband aus einem Verbundwerkstoff aus Endlosfasern und einem thermoplastischen Kunststoffmaterial mit einer Breite von 10 bis 50 mm und einer Dicke von 100 bis 300 µm um den Bund gelegt wird, sich überlappende Enden des Bindebands gebildet werden und im Bereich der sich überlappenden Enden Wärme derart auf die übereinander liegenden Bindebandenden aufgebracht wird, dass der thermoplastische Kunststoff erweicht und anschließend auf den erweichten Bereich flächig Druck derart ausgeübt wird, dass die Bindebandenden ineinander gedrückt werden.

2. Verfahren nach Anspruch 1, **dadurch gekennzeichnet, dass** zur Herbeiführung einer Verbindung des Bindebands die Bindebandenden (1a, 1b) auf Temperaturen von 100 bis 500°C.

3. Verfahren nach Anspruch 2, **dadurch gekennzeichnet, dass** die Bindebandenden auf 150° bis 450°C erhitzt werden.

4. Verfahren nach Anspruch 2, **dadurch gekennzeichnet, dass** die Bindebandenden auf 250° bis 400°C erhitzt werden.

5. Verfahren nach einem der vorhergehenden Ansprüche, **dadurch gekennzeichnet, dass** die Erwärmungstemperatur auf den Erweichungspunkt des verwendeten Kunststoffmaterials abgestimmt ist.

6. Verfahren nach einem der vorhergehenden Ansprüche, **dadurch gekennzeichnet, dass** die erweichten Bindebandenden mit einem Druck von 0,1 N/mm² bis 10 N/mm² aufeinandergedrückt werden.

7. Verfahren nach Anspruch 6, **dadurch gekennzeichnet, dass** die Bindebandenden mit einem Druck von 1 N/mm² aufeinandergedrückt werden.

8. Verfahren nach einem der vorhergehenden Ansprüche, **dadurch gekennzeichnet, dass** das Bindeband vor dem Erwärmen mit geeigneten Spanneinrichtungen gespannt wird und nach dem Erwärmen, Ineinanderdrücken und Erkalten der Verbindungsstelle Bindebandendbereiche die über die Verbindungsstelle überstehen, abgeschnitten werden.

9. Verfahren nach einem der vorhergehenden Ansprüche, **dadurch gekennzeichnet, dass** die sich überlappenden Bindebandenden (1a, 1b) jeweils im Bereich eines freien Bindebandendes (1a, 1b) mit Wärme und Druck beaufschlagt werden, so dass keine überstehenden Enden entstehen, wobei die Bindebandenden zwischen den Verbindungsbereichen gegeneinander gespannt werden.

10. Verfahren nach einem der vorhergehenden Ansprüche, **dadurch gekennzeichnet, dass** die Bindebandenden (1a, 1b) mit auf die Bindebandenden wirkende Reibrollen oder an dem Bindebandenden angreifenden Zugelementen gespannt werden.

11. Bindeband zum Umreifen oder Binden von Metallbunden aus gewalztem Blech, insbesondere Aluminium-, Kupfer- oder Stahl-Coils, zur Verwendung in einem Verfahren nach einem der Ansprüche 1 bis 10, **dadurch gekennzeichnet, dass** das Bindeband (1) aus Endlosfasern (2) und einer Kunststoffmatrix (3) ausgebildet ist, wobei die Endlosfasern (2) in einer oder mehreren übereinander liegenden Lagen vorhanden sind und im Wesentlichen parallel zueinander ausgerichtet sind, wobei die Fasern Glasfasern und/oder Aramidfasern und/oder Kohlenstofffasern und/oder Metallfasern und/oder natürliche Fasern sind und die Kunststoffmatrix (3) aus einem thermoplastischen Kunststoff ausgebildet ist, wobei das Bindeband (1) eine Breite von 10 bis 50 mm bei einer Dicke von 100 bis 400 µm und eine Zugfestigkeit von die 1000 MPa besitzt.

12. Bindeband nach Anspruch 11, **dadurch gekennzeichnet, dass** das Bindeband eine Breite von 25 bis 40 mm besitzt.

13. Bindeband nach Anspruch 11, **dadurch gekennzeichnet, dass** das Bindeband eine Breite von 30 mm besitzt.

14. Bindeband nach einem der vorhergehenden Ansprüche, **dadurch gekennzeichnet, dass** das Bindeband eine Dicke von 200 bis 350 µm besitzt.

15. Bindeband nach einem der Ansprüche 11 bis 14, **dadurch gekennzeichnet, dass** der thermoplastische, die Matrix (3) ausbildende Kunststoff ein Polyolefin und/oder Polyamid ist.

16. Verwendung eines Bindebands nach einem der Ansprüche 11 bis 15 für Bunde aus aufgerollten gewalzten Metallblechen und/oder Kunststoffen und/oder Papier oder zum Umreifen von gestapelten Metallplatten oder Metallblechplatinen oder Kunststoffplatten oder Kunststoffplatinen oder für das Umreifen von Metallstäben, wie Baustahlstäben oder Rohrpaketen, wie Metallrohr- oder Kunststoffrohrpaketen.

## Claims

1. Method for packaging or strapping coils of metal, such as aluminium, copper or steel coils, wherein a binding tape made of a composite material consisting of continuous fibres and a thermoplastic plastic material and having a width of 10 to 50 mm and a thickness of 100 to 300 µm is placed around the coil, overlapping ends of binding tape are formed and heat is applied to the binding tape ends lying on top of one another in the region of the overlapping ends in such a way that the thermoplastic plastic material is softened, and surface pressure is then applied to the softened region in such a way that the binding tape ends are pressed into one another.

2. Method according to claim 1, **characterised in that** the binding tape ends (1a, 1b) are heated to temperatures of 100°C to 500°C in order to produce a joint of the binding tape.

3. Method according to claim 2, **characterised in that** the binding tape ends are heated to 150°C to 450°C.

4. Method according to claim 2, **characterised in that** the binding tape ends are heated to 250°C to 400°C.

5. Method according to any of the preceding claims, **characterised in that** the heating temperature is matched to the softening point of the plastic material used.

6. Method according to any of the preceding claims, **characterised in that** the softened binding tape ends are pressed onto one another with a pressure of 0.1 N/mm² to 10 N/mm².

7. Method according to claim 6, **characterised in that** the softened binding tape ends are pressed onto one another with a pressure of 1 N/mm².

8. Method according to any of the preceding claims, **characterised in that** the binding tape is tensioned using suitable tensioning devices before heating, and **in that** binding tape end sections which extend beyond the joint after the heating, pressing together and cooling of the joint are cut off.

9. Method according to any of the preceding claims, **characterised in that** heat and pressure are applied to each of the overlapping binding tape ends (1a, 1b) in the region of a free binding tape end (1a, 1b), so that no overhanging ends are created, the binding tape ends being tensioned against one another between the joint regions.

10. Method according to any of the preceding claims, **characterised in that** the binding tape ends (1a, 1b) are tensioned by means of friction rollers acting on the binding tape ends or by means of tensioning elements applied to the binding tape ends.

11. Binding tape for packaging or strapping coils of rolled sheet metal, in particular aluminium, copper or steel coils, for use in a method according to any of claims 1 to 10, **characterised in that** the binding tape (1) is made of continuous fibres (2) and a plastic matrix (3), wherein the continuous fibres (2) are present in one or more layers placed on top of one another and are oriented substantially parallel to one another, wherein the fibres are glass fibres and/or aramide fibres and/or carbon fibres and/or metal fibres and/or natural fibres and the plastic matrix (3) is made of a thermoplastic plastic material, the binding tape (1) having a width of 10 to 50 mm and a thickness of 100 to 400 µm and a tensile strength of around 1000 MPa.

12. Binding tape according to claim 11, **characterised in that** the binding tape has a width of 25 to 40 mm.

13. Binding tape according to claim 11, **characterised in that** the binding tape has a width of 30 mm.

14. Binding tape according to any of the preceding claims, **characterised in that** the binding tape has a thickness of 200 to 350 µm.

15. Binding tape according to any of claims 11 to 14, **characterised in that** the thermoplastic material forming the matrix (3) is a polyolefin and/or a polyamide.

16. Use of a binding tape according to any of claims 11 to 15 for coils of rolled sheet metal and/or plastic and/or paper or for packaging stacked metal plates or sheet metal blanks or plastic plates or plastic sheeting, or for packaging metal bars such as structural steel bars or pipe packs such as metal or plastic pipe packs.

## Revendications

1. Procédé pour lier ou cercler des bobines de métal enroulées, telles que des bobines d'aluminium, de cuivre ou d'acier, dans lequel on pose autour de la bobine une bande de cerclage en matériau composite formé de fibres sans fin et d'une matière thermoplastique avec une largeur de 10 à 50 mm et une épaisseur de 100 à 300 µm, on forme des extrémités en chevauchement de la bande de cerclage et on applique dans la région des extrémités en chevauchement de la chaleur sur les extrémités superposées de la bande de cerclage de telle façon que la matière thermoplastique se ramollit et on exerce ensuite une pression surfacique sur la zone ramollie de telle façon que les extrémités de la bande de cerclage sont pressées l'une dans l'autre.

2. Procédé selon la revendication 1, **caractérisé en ce que** pour provoquer une liaison de la bande de cerclage, les extrémités de la bande de cerclage (1a, 1b) sont chauffées à des températures de 100 à 500° C.

3. Procédé selon la revendication 2, **caractérisé en ce que** les extrémités de la bande de cerclage sont chauffées à 150 à 450° C.

4. Procédé selon la revendication 2, **caractérisé en ce que** les extrémités de la bande de cerclage sont chauffées à 250 à 400° C.

5. Procédé selon l'une des revendications précédentes, **caractérisé en ce que** la température d'échauffement est accordée à la température de ramollissement de la matière plastique utilisée.

6. Procédé selon l'une des revendications précédentes, **caractérisé en ce que** les extrémités ramollies de la bande de cerclage sont pressées l'une sur l'autre avec une pression de 0,1 N/mm² à 10 N/mm².

7. Procédé selon la revendication 6, **caractérisé en ce que** les extrémités de la bande de cerclage sont pressées l'une sur l'autre avec une pression de 1 N/mm².

8. Procédé selon l'une des revendications précédentes, **caractérisé en ce que** la bande de cerclage est tendue avant le réchauffement avec des moyens de tensionnement appropriés, et après réchauffement, pressage mutuel et refroidissement de l'emplacement de liaison, des zones terminales de la bande de cerclage qui dépassent au-delà de l'emplacement de liaison sont supprimées par découpe.

9. Procédé selon l'une des revendications précédentes, **caractérisé en ce que** les extrémités en chevauchement (1a, 1b) de la bande de cerclage sont sollicitées en chaleur et en pression respectivement dans la région d'une extrémité libre (1a, 1b) de la bande de cerclage de telle façon qu'il n'apparaît aucune extrémité en dépassement, et les extrémités de la bande de cerclage entre les zones de liaison sont tendues l'une par rapport à l'autre.

10. Procédé selon l'une des revendications précédentes, **caractérisé en ce que** les extrémités (1a, 1b) de la bande de cerclage sont tendues avec des galets à friction agissant sur les extrémités de la bande de cerclage ou avec des éléments de traction attaquant les extrémités de la bande de cerclage.

11. Bande de cerclage pour cercler ou pour lier des bobines de métal en tôle laminée, en particulier des bobines d'aluminium, de cuivre ou d'acier, à utiliser dans un procédé selon l'une des revendications 1 à 10, **caractérisée en ce que** la bande de cerclage (1) est réalisée à partir de fibres sans fin (2) et d'une matrice de matière plastique (3), telles que les fibres sans fin (2) se présentent en une ou plusieurs couches situées les unes au-dessus des autres et sont orientées sensiblement parallèlement les unes aux autres, dans laquelle les fibres sont des fibres de verre et/ou des fibres aramides et/ou des fibres de carbone et/ou des fibres de métal et/ou des fibres naturelles, et la matrice en matière plastique (3) est réalisée en une matière thermoplastique, dans laquelle la bande de cerclage (1) possède une largeur de 10 à 50 mm avec une épaisseur de 100 à 400 µm, et une résistance à la traction aux alentours de 1000 MPa.

12. Bande de cerclage selon la revendication 11, **caractérisée en ce que** la bande de cerclage possède une largeur de 25 à 40 mm.

13. Bande de cerclage selon la revendication 11, **caractérisée en ce que** la bande de cerclage possède une largeur de 30 mm.

14. Bande de cerclage selon l'une des revendications précédentes, **caractérisée en ce que** la bande de cerclage possède une épaisseur de 200 à 350 µm.

15. Bande de cerclage selon l'une des revendications 11 à 14, **caractérisée en ce que** la matière thermoplastique constituant la matrice (3) est une polyoléfine ou un polyamide.

16. Utilisation d'une bande de cerclage selon l'une des revendications 11 à 15 pour des bobines de tôle métallique laminée enroulée et/ou des bobines de matière plastique et/ou de papier, ou pour cercler des plaques métalliques ou des platines de tôles métalliques empilées ou des plaques de matière plastique ou des platines de matière plastique empilées, ou bien pour cercler des barres métalliques, telles que des barres d'acier de construction, ou des paquets de tubes, tels que des paquets de tubes métalliques ou de tubes en matière plastique.
